# EUROPÄISCHE PATENTSCHRIFT

(11) **EP 3 497 763 B1**
(45) Veröffentlichungstag und Bekanntmachung des Hinweises auf die Patenterteilung: **05.10.2022**
(21) Anmeldenummer: 17751749.7
(22) Anmeldetag: 11.08.2017
(51) Int. Cl.: H02G 3/04, H02G 3/06

(54) **VERBINDUNGSVORRICHTUNG UND LEITUNGSFÜHRUNGSEINRICHTUNG**
CONNECTION ARRANGEMENT AND LINE-ROUTING DEVICE
DISPOSITIF DE CONNEXION ET SYSTÈME DE GUIDAGE DE CÂBLES

(30) Priorität: 12.08.2016 DE 202016104470 U
(43) Veröffentlichungstag der Anmeldung: 19.06.2019
(73) Patentinhaber: Igus GmbH, 51147 Köln (DE)
(72) Erfinder: HERMEY, Andreas, 53773 Hennef (DE); LAPIERE, Karl Oskar, 53844 Troisdorf (DE)
(74) Vertreter: Lippert Stachow Patentanwälte Rechtsanwälte
(86) Internationale Anmeldenummer: PCT/EP2017/070482
(87) Internationale Veröffentlichungsnummer: WO 2018/029355

(56) Entgegenhaltungen:
- AU-A4- 2011 100 502
- DE-A1-102007 017 940
- DE-U1-202004 005 801

## Beschreibung

Die Erfindung betrifft eine Verbindungsvorrichtung mit Verbindungselementen zur Verbindung zweier benachbarter Glieder einer Leitungsführungseinrichtung zur Führung von Schläuchen, Kabeln oder dergleichen aus in Längsrichtung aneinandergereihten Gliedern, wobei die Glieder jeweils zwei in Querrichtung beabstandet angeordnete einen Aufnahmeraum als Teil eines Leitungsführungskanals für die Schläuche, Kabel oder dergleichen begrenzende Seitenwandsegmente aufweisen und die Seitenwandsegmente in Einbaulage jeweils über ein Verbindungselement mit dem zugeordneten Seitenwandsegment des jeweils benachbarten Gliedes verbunden sind, wobei die zur Verbindung der Seitenwandsegmente zweier benachbarter Glieder vorgesehenen Verbindungselemente unter Ausbildung einer Grundeinheit der Verbindungsvorrichtung über eine Traverse voneinander beabstandet miteinander verbunden sind. Die Erfindung betrifft ferner eine Leitungsführungseinrichtung mit der Verbindungsvorrichtung.

Eine Verbindungsvorrichtung der oben genannten Art ist aus der AU 2011 100 502 A4 bekannt. Dieses Dokument betrifft eine Kabelleiter aus in Längsrichtung aneinandergereihten Gliedern, die durch Verbindungselemente miteinander verbunden sind. Die über jeweils eine Traverse voneinander beabstandet miteinander verbundenen Verbindungselemente sind in Form von sich in Längsrichtung erstreckenden flachen Laschen ausgebildet, die sich zwischen in Längsrichtung benachbarten Seitenwandsegmenten der Glieder erstrecken und an deren Außenseiten mit durch Öffnungen hindurchgreifende Befestigungsbolzen befestigt sind.

Eine Verbindungsvorrichtung wie auch Leitungsführungseinrichtung mit einer Verbindungsvorrichtung, wobei die Seitenwandsegmente eines Glieds der Leitungsführungseinrichtung in Einbaulage über ein Verbindungselement mit dem zugeordneten Seitenwandsegment des jeweils benachbarten Gliedes verbunden sind, ist auch aus den Dokumenten DE 10 2007 017 940 A1, DE 20 2004 005 801 U1 und DE 201 07 003 U1 bekannt. Diese Verbindungsvorrichtungen sind jedoch aufwendig im Aufbau, in der Herstellung und in der Montage.

Eine Aufgabe der Erfindung ist, eine gattungsgemäße Verbindungsvorrichtung der eingangs genannten Art bzw. eine Leitungsführungseinrichtung mit der gattungsgemäßen Verbindungsvorrichtung der eingangs genannten Art bereitzustellen, die einfacher aufgebaut, herstellbar und montierbar ist. Ferner soll deren Reinigung erleichtert werden.

Die gestellte Aufgabe wird erfindungsgemäß durch die Merkmale des Anspruches 1 gelöst. Vorteilhafte Weiterbildungen werden in den Unteransprüchen beschrieben. Die gestellte Aufgabe wird insbesondere dadurch gelöst, dass mindestens zwei Grundeinheiten vorgesehen sind, die in einer Höhenrichtung senkrecht zur Querrichtung und Längsrichtung der Leitungsführungseinrichtung voneinander beabstandet angeordnet sind.

Diese Anordnung der über die Traverse miteinander verbundenen Verbindungselemente bildet jeweils eine Grundeinheit. Der Abstand in Längsrichtung der Traverse der zur Verbindung der Seitenwandsegmente benachbarter Glieder vorgesehenen Verbindungselemente kann gleich dem Abstand sein, in dem diese Verbindungselemente einer gattungsgemäßen Verbindungsvorrichtung in Einbaulage in eine übliche Leitungsführungseinrichtung zueinander angeordnet sind. Dies ergibt sich implizit dadurch, dass die Verbindungselemente zur Verbindung der Seitenwandsegmente benachbarter Glieder vorgesehen sind. Die benachbarten Glieder können über die Verbindungselemente in einer Verbindungsposition miteinander verbunden sein. Die Seitenwandsegmente können jeweils einstückig ausgebildet sein.

Mittels der Grundeinheiten können somit verschiedene Funktionen erfüllt werden: Zum einen können benachbarte Glieder der Leitungsführungseinrichtung insbesondere allein über Verbindungselemente an ihren Seitenwandsegmenten miteinander verbunden sein. Zum anderen können mittels der Grundeinheiten die in Querrichtung der Leitungsführungseinrichtung benachbarten Seitenwandsegmente über die Traverse des Verbindungspaares beabstandet miteinander verbunden sein. Die Grundeinheiten können insbesondere zur Verbindung in Längsrichtung der Leitungsführungseinrichtung benachbarter Seitenwandsegmente und darüber hinaus zur Verbindung in Querrichtung der Leitungsführungseinrichtung benachbarter Seitenwandsegmente dienen.

Die Grundeinheiten können somit die Funktion eines Quersteges und die der Verbindungselemente erfüllen. Sie können zumindest an einigen Stellen der Leitungsführungseinrichtung oder insgesamt anstatt üblicher Querstege eingesetzt werden. Diese Querstege können eingespart werden. Eine Leitungsführungseinrichtung mit derartigen Grundeinheiten kann somit deutlich weniger Bauteile aufweisen. Die Leitungsführungseinrichtung kann hinsichtlich Aufbau, der Herstellung und der Montage wesentlich vereinfacht werden. Dank der Verringerung der Bauteile kann zugleich die Reinigung der Verbindungsvorrichtung erleichtert werden.

Ferner können die Grundeinheiten den Aufnahmeraum seitlich begrenzen und/oder denselben unterteilen.

Zudem wird bei einer Leitungsführungseinrichtung mit den Grundeinheiten und ohne Querstege die Anzahl an Verbindungsstellen und zwar um die Verbindungsstellen der üblichen Querstege zu den Seitenwandsegmenten reduziert. Allgemein können an den Verbindungsstellen sich leichter Verschmutzungen festsetzen, die ihrerseits schwierig zu entfernen sind. Mit der Reduktion der Verbindungsstelle geht zugleich eine erleichterte Reinigung der Leitungsführungseinrichtung einher.

Die Verbindungselemente der Grundeinheiten sind vorzugsweise fest, insbesondere einstückig, mit der Traverse verbunden. Vorteilhaft einfach können die Grundeinheiten einstückig ausgebildet sein. Grundsätzlich können die Seitenwandsegmente zweier benachbarter Glieder in der Verbindungsposition ausschließlich über die zumindest zwei Grundeinheiten miteinander verbunden angeordnet sein.

Sind, wie häufig der Fall, pro Glied lediglich zwei, insbesondere parallele, Seitenwandsegmente mit Verbindungselementen vorgesehen, so können diese dann das Seitenwandsegment mit dem zugeordneten Seitenwandsegment des in Längsrichtung der Leitungsführungseinrichtung benachbarten Gliedes verbinden.

Weisen die Glieder mehr als zwei Seitenwandsegmente, beispielsweise zwei äußere Seitenwandsegmente und ein in Querrichtung zwischen diesen angeordnetes mittleres Seitenwandsegment auf, so können das mittlere Seitenwandsegment beispielsweise über zwei Verbindungselemente jeweils mit dem zugeordneten mittleren Seitenwandsegment des benachbarten Gliedes und die beiden Verbindungselemente, jeweils als Teil einer der beiden Grundeinheiten, über eine Traverse mit dem zugeordneten außen angeordneten Verbindungselement verbunden sein.

Es können, in Einbaulage in die Leitungsführungseinrichtung die in Querrichtung zur Leitungsführungseinrichtung fluchtenden Verbindungselemente über die Traverse beabstandet miteinander verbunden sein. Die Beabstandung kann insbesondere so erfolgen, dass der Aufnahmeraum von der Traverse vollständig überbrückt wird.

Einander zugeordnete Seitenwandsegmente der benachbarten Glieder können über die Verbindungselemente bezüglich der Längsrichtung der Leitungsführungseinrichtung aneinander anschließend, insbesondere fluchtend zueinander angeordnet sein. Insbesondere können sie stirnseitig aneinander angrenzen. Insbesondere ist nicht vorgesehen, dass sie sich seitlich überlappen. Eine Überlappung würde die Reinigung der Leitungsführungseinrichtung deutlich erschweren.

In Querrichtung benachbarte Seitenwandsegmente sind bezüglich der Querrichtung vorzugsweise fluchtend zueinander angeordnet. Sie werden beim Verfahren der Leitungsführungseinrichtung synchron bewegt.

Kraftmechanisch und konstruktiv günstig sind die Verbindungselemente der Grundeinheiten in einer Weiterbildung der Verbindungsvorrichtung bezüglich einer zur Längserstreckung der Traverse senkrechten und mittigen Spiegelsymmetrieebene spiegelsymmetrisch zueinander angeordnet. Insbesondere sind die Verbindungselemente spiegelsymmetrisch ausgerichtet angeordnet. Herstellungsseitig einfach können die Traverse und die Verbindungselemente in einer gemeinsamen Ebene angeordnet sein.

Ebenfalls konstruktiv und kraftmechanisch günstig kann die Traverse bezüglich einer Erstreckung der Verbindungselemente senkrecht zu der Längserstreckung der Traverse von einem Mittenbereich der Verbindungselemente ausgehend angeordnet sein. Insbesondere kann die Traverse genau mittig oder mit einer Abweichung von max. 30 %, insbesondere max. 10 % oder 5 % der Erstreckung der Verbindungselemente in Längsrichtung der Leitungsführungseinrichtung erfolgen.

Mit dem mittigen Angriff der Traverse an die Verbindungselemente können diese zwei freie Enden aufweisen. Hierbei können die Verbindungselemente an ihren freien Enden jeweils erste Verbindungsmittel zur Verbindung der Grundeinheit mit an den Seitenwandsegmenten vorgesehenen zweiten Verbindungsmitteln aufweisen.

Die Verbindungselemente der Grundeinheiten können jeweils eine sich quer zur Traverse erstreckende ebene, insbesondere lineare Grundform aufweisen. Insbesondere können die Grundeinheiten eine flache ebene Form aufweisen. Sie können sich in einer bezüglich der Längserstreckung der Traverse axial-radialen Ebene erstrecken. Vorteilhaft zum verbesserten Kraftangriff der Verbindungselemente an die jeweils zugeordneten Seitenwandsegmente können die Verbindungselemente der Grundeinheiten eine U-förmige Grundform mit zwei vorzugsweise gleichen Schenkeln aufweisen. Die Montage erleichternd und kraftmechanisch günstig können die Schenkel in Längserstreckung der Traverse und/oder von derselben weg weisend angeordnet sein.

Die Teile der Grundeinheiten, d.h. Verbindungselemente und/oder Traverse, können jeweils einen runden Querschnitt aufweisen. Dies ermöglicht eine verringerte Reibung an Kabel und Schläuchen bei einer möglichen Relativbewegung derselben zu der Grundeinheit in Einbaulage in die Leitungsführungseinrichtung. Ferner sind die Grundeinheiten dadurch weniger schmutzanfällig und leichter zu reinigen. Insbesondere können die Traversen der Grundeinheiten einen ovalen Querschnitt mit einem größeren Durchmesser parallel zu einer von der Traverse und den Verbindungselementen definierten Ebene aufweisen. Hierdurch kann eine verbesserte Verwindungssteifigkeit der Grundeinheit bezüglich dieser Ebene erzielt werden.

Montage und Herstellung vereinfachend, können die Grundeinheiten einstückig ausgebildet sein. Insbesondere können die Verbindungselemente der Grundeinheiten stoffschlüssig mit der Traverse verbunden sein.

Die Grundeinheiten können als Spritzgussteil aus einem Werkstoff, insbesondere aus einem Kunststoff, ausgebildet sein. Alternativ kann die Traverse, insbesondere allein die beispielsweise aus einem wenig elastischen bis hartelastischen Werkstoff als der der Verbindungselemente gefertigt sein, wodurch die Traverse biege- und/oder verwindungssteifer als Verbindungselemente ausgelegt werden kann. Dies hätte den Vorteil, dass die Verbindungselemente vorzugsweise geringfügig elastisch biegbar ausgebildet sein können, während die Traverse weiterhin biege- und verwindungssteif bleibt. Hierbei können die Verbindungselemente beispielsweise mittels eines 2-Komponenten-Spritzgussverfahren an die Traverse angespritzt werden.

Die Grundeinheiten und insbesondere deren Traversen können zur Verbesserung einer Verwindungssteifigkeit konstruktiv verstärkt sein. Insbesondere kann zur Verstärkung ein an die Traverse und/oder an die Verbindungselemente anschließendes Stabwerk vorgesehen sein. Das Stabwerk kann an die Grundeinheit, insbesondere dessen Traverse, anschließen oder in die Grundeinheit integriert sein. Das Stabwerk kann rahmenartig ausgeführt sein. Es kann als ebenes Stabwerk ausgebildet sein. Das Stabwerk kann sich insbesondere in einer zur Längserstreckung der Traverse axialen Ebene erstreckend angeordnet sein.

In einer Weiterbildung der Verbindungsrichtung können die beiden Grundeinheiten über eine Konstruktion, insbesondere über das Stabwerk fest miteinander verbunden sein. Grundeinheiten und Stabwerk können den von den Seitenwandsegmenten definierten Aufnahmeraum für die Schläuche, Kabel oder dergleichen begrenzen oder teilen. Insbesondere erstreckt sich das Stabwerk als ebenes Stabwerk in einer von den beiden Grundeinheiten definierten Ebene.

Vorteilhaft einfach kann das Stabwerk zumindest einen die Grundeinheiten, insbesondere die Traversen miteinander insbesondere fest verbindenden Stabwerksteg aufweisen. Kraftmechanisch günstig kann der eine Stabwerksteg mittig an den Traversen angreifend angeordnet sein. Vorzugsweise erstreckt der eine Stabwerksteg quer zur Längserstreckung der Traverse, bei Einbaulage in die Leitungsführungseinrichtung in einer Höhenrichtung der Leitungsführungseinrichtung senkrecht zur Längsrichtung und zur Querrichtung derselben.

Das Stabwerk kann weitere Stabwerkstege aufweisen, die winklig oder parallel zu den Traversen verlaufend angeordnet sind. Die Stabwerkstege können allein oder zusammen mit den Traversen den Aufnahmeraum in einzelne Fächer aufteilen.

Günstig hinsichtlich der Herstellung und Montage können die Grundeinheiten und das Stabwerk als ein einstückiges Bauteil ausgebildet sein. Grundeinheiten und Stabwerk können insbesondere stoffschlüssig miteinander verbunden sein. Beide können mittels Spritzguss vorzugsweise aus Kunststoff hergestellt sein.

Die Aufgabe wird weiterhin durch eine Leitungsführungseinrichtung zur Führung von Schläuchen, Kabeln oder dergleichen in einem Leitungsführungskanal gelöst, wobei die Leitungsführungseinrichtung in Längsrichtung aneinandergereihte und miteinander verbundene Gliedern aufweist und die Glieder zwei in Querrichtung beabstandet angeordnete den Leitungsführungskanal begrenzende Seitenwandsegmente umfassen. Die Seitenwandsegmente sind jeweils mit dem zugeordneten Seitenwandsegment des benachbarten Seitenwandsegments mittels einer Verbindungsvorrichtung gemäß einer der zuvor beschriebenen Ausführungsformen miteinander verbunden. Die Verbindungsvorrichtung umfasst zumindest zwei Grundeinheiten mit zur Verbindung der Seitenwandsegmente benachbarter Glieder vorgesehenen Verbindungselementen, die, über eine Traverse voneinander beabstandet, miteinander verbunden sind. Die Verbindung der Seitenwandsegmente benachbarter Glieder ist insbesondere lösbar. Die Leitungsführungseinrichtung weist eine Querrichtung und eine senkrecht zu dieser angeordnete Höhenrichtung auf, wobei Höhenrichtung und Querrichtung senkrecht zur Längsrichtung angeordnet sind. Die Querrichtung der Leitungsführungseinrichtung kann zumindest etwa gleich der Längserstreckung der Traverse in Einbaulage in die Leitungsführungseinrichtung sein.

In einer vorteilhaft einfachen Ausführungsform der Leitungsführungseinrichtung können sich die Traversen der zumindest zwei Grundeinheiten in Querrichtung der Leitungsführungseinrichtung erstrecken. Insbesondere können die Traversen zwischen den beiden durch die Grundeinheit verbundenen Gliedern angeordnet sein.

Zur Stabilisierung der Leitungsführungseinrichtung kann die Leitungsführungseinrichtung, bezüglich der Höhenrichtung senkrecht zur Längsrichtung und zur Querrichtung, eine Grundeinheit in einem Mittenbereich, eine Grundeinheit in einem unteren Bereich und/oder eine Grundeinheit in einem oberen Bereich aufweisen. Es kann bezüglich der Höhenrichtung eine Grundeinheit mittig, eine Grundeinheit oben und/oder eine Grundeinheit unten angeordnet sein.

In einer vorteilhaften einfachen Ausführungsform der Leitungsführungseinrichtung können die Verbindungselemente jeweils die benachbarten Seitenwandsegmente endseitig formund/oder reibschlüssig miteinander verbindend angeordnet sein. Zur Verbindung sind keine zusätzlichen Mittel wie Schrauben oder dergleichen notwendig. Es wird insbesondere eine einfache Steck-und/oder Rastverbindung bevorzugt.

Wie oben ausgeführt, können die Verbindungselemente der Grundeinheiten jeweils zwei freie Enden mit ersten Verbindungsmitteln zum Anschluss an zweite Verbindungsmittel des jeweils zugeordneten Seitenwandsegments aufweisen.

In einer Ausführungsform der Leitungsführungseinrichtung können die ersten Verbindungsmittel als endseitige, insbesondere walzenartige oder kugelartige Verdickungen ausgebildet sein. Bei der bereits oben beschriebenen gestreckten Form der Verbindungselemente können die endseitigen Verdickungen die Ausbildung einer hantelartigen Form bewirken. In einer alternativen und als vorteilhaft angesehenen Ausführungsform der Leitungsführungseinrichtung können die freien Enden der Verbindungselemente jeweils als Steckvorsprung ausgebildet sein. Kraftmechanisch günstig können sich diese Steckvorsprünge in Querrichtung erstrecken. Dies trifft insbesondere für die bereits oben beschriebenen Verbindungselemente mit U-förmig Grundform zwei vorzugsweise Schenkeln zu.

In beiden Fällen können die freien Enden in eine ihnen zugeordnete als zweites Verbindungsmittel an dem Seitenwandsegment vorgesehene in Querrichtung geöffnete Aufnahmeöffnung eingreifen. Hierbei kann die Innenkontur Aufnahmeöffnung der Außenkontur des jeweils zugeordneten ersten Verbindungsmittel angepasst ausgebildet sein. Im Falle einer Steckverbindung mittels der Steckvorsprünge können die Steckvorsprünge vorzugsweise leicht konisch zulaufend ausgebildet sein. Leicht konisch heißt in einem Öffnungswinkel von weniger als 60°, insbesondere als 30° oder 15° konisch zusammenlaufend. Selbstverständlich gilt auch eine Umkehrung der Mittel, indem die ersten Verbindungsmittel an den Seitenwandsegmenten und die zweiten Verbindungsmittel an den Verbindungselementen angeordnet sind.

Die Leitungsführungseinrichtung kann in üblicher Weise unter Ausbildung von Trumen über einen Umlenkbogen verfahrbar sein. In einer vorteilhaften Ausführungsform der Leitungsführungseinrichtung können die Seitenwandsegmente flexibel biegbar ausgebildet sein. Dies hat den Vorteil, dass die Seitenwandsegmente zur Biegung und damit zur Ausbildung eines Umlenkbogens beim Verfahren der Leitungsführungseinrichtung zumindest beitragen können. Ferner können die Seitenwandsegmente eine entsprechend größere axiale Länge aufweisen, wodurch die Anzahl an Gliedern pro Längeneinheit und damit der Stellen, an denen die Glieder miteinander verbunden sind entsprechend verringert werden kann. Damit kann der Aufbau der Leitungsführungseinrichtung vereinfacht werden.

Insbesondere kann vorgesehen sein, dass die Seitenwandsegmente zumindest in einer Biegeebene senkrecht zur Querrichtung der Leitungsführungseinrichtung flexibel biegbar ausgebildet sind.

Insbesondere können die benachbarten Glieder bezüglich der Biegeebene fest miteinander verbunden angeordnet sein.

In einer weiteren vorteilhaften Ausführungsform der Leitungsführungseinrichtung können die benachbarten Glieder der Leitungsführungseinrichtung bezüglich der Längsrichtung in einem vorzugsweise konstanten Abstand zueinander gehalten angeordnet sein. Hierdurch kann ein Freiraum zwischen den in Längsrichtung benachbarten Seitenwandsegmenten gebildet werden. Die Beabstandung der Glieder hat den Vorteil, dass sich zwischen den Gliedern im Betrieb schwerer Schmutzpartikel festsetzen und dass die Glieder zur Reinigung stirnseitig leicht zugänglich sind. Der konstante Abstand kann auch fester Abstand genannt werden. Dieser konstante Abstand kann beim ordnungsgemäßen Verfahren der Leitungsführungseinrichtung auch über einen Umlenkbogen stets unverändert bleiben. Dies hat zur Folge, dass zur Ausbildung des Umlenkbogens keine Verschwenkung der Glieder, sondern die flexible Biegung der Seitenwandsegmente erfolgt. Somit kann die Biegung der Leitungsführungseinrichtung zur Ausbildung des Umlenkbogens bis auf eventuelle geringfügige elastische Verformungen der Verbindungselemente der Grundeinheiten allein über die Biegung der Seitenwandsegmente erfolgen. Die Biegeachse kann parallel zur Querrichtung ausgerichtet sein.

Vorzugsweise ist die Biegung zur Ausbildung eines Biegeradius in einer ersten Biegerichtung sowie zur Ausbildung einer freitragenden Länge in einer zur ersten Biegerichtung gegensinnigen zweiten Biegerichtung Anschlag begrenzt.

Die vorzugsweise konstante Beabstandung der benachbarten Glieder kann beispielsweise über die Verbindungselemente bzw. der Beabstandung der freien Enden derselben und/oder über Abstandselemente, beispielsweise über in Längsrichtung wirksame Anschläge der Glieder erfolgen. Die Beabstandung kann beispielsweise weniger als 30%, bevorzugt weniger als 15% oder weniger als 5% der axialen Länge eines Seitenwandsegments sein. Die Beabstandung kann etwa oder gleich der Dicke des Quersteges in Längsrichtung bzw. dieser Dicke mit einer Abweichung von bis zu 80% oder bis zu 50% entsprechen.

In diesem Zusammenhang wird insbesondere auf die Druckschrift DE 10 2007 017 940 A1 verwiesen. In dieser Druckschrift wird ein flexibel biegbares Seitenwandsegment beschrieben, deren Merkmale zum grundsätzlichen Aufbau, insbesondere bezüglich der konstruktiven Maßnahmen zur flexiblen Biegung des Seitenwandsegments für ein Seitenwandsegmente der erfindungsgemäßen Leitungsführungseinrichtung übernommen werden können. Daher wird dieser Offenbarungsgehalt der DE 10 2007 017 940 A1 hinsichtlich der Merkmale zum grundsätzlichen Aufbau bezüglich der konstruktiven Maßnahmen zur flexiblen Biegung des Seitenwandsegments in den Offenbarungsgehalt der vorliegenden Schutzrechtsanmeldung aufgenommen.

Wie in DE 10 2007 017 940 A1 beschrieben, können die Seitenwandsegmente jeweils einen in der Biegeebene flexiblen Verbindungssteg aufweisen. Dessen Biegung wird durch unterseitig und/oder oberseitig auf ihm vorzugsweise einstückig angeordnete Seitenteile mit in Längsrichtung weisenden und zur Begrenzung der Biegung gegeneinander führbaren Anschlägen begrenzt. Hierbei können die Anschläge in Form einer Steckverbindung ineinander greifen.

In einer vorteilhaften Ausführungsform der Leitungsführungseinrichtung können die Seitenwandsegmente jeweils aus verschwenkbar miteinander verbundenen Seitenwandgliedern aufgebaut sein, die jeweils zwei gegenüberliegende Seitenteile aufweisen, wobei diese in der Biegeebene verschwenkbar mit den unmittelbar benachbarten Seitenteilen verbunden sind und die Anschläge zur Begrenzung eines Biegewinkels aufweisen, wobei mehrere miteinander verbundene Seitenteile das Seitenwandsegment bilden.

Der Verbindungssteg kann bezüglich der Höhe randseitig, insbesondere bezüglich des Umlenkbogens innen angeordnet sein. Kraftmechanisch günstig kann der Verbindungssteg bezüglich der Höhe in einem Mittenbereich des Seitenwandsegments angeordnet sein.

Für den oben beschriebenen Fall, dass die Seitenwandsegmente jeweils einen in der Biegeebene flexiblen Verbindungssteg aufweisen, ist es hinsichtlich der Kraftübertragung in Längsrichtung kraftmechanisch günstig, eine Grundeinheit in Höhe des Verbindungssteges anzuordnen. Diese Maßnahme, nur eine Grundeinheit zu verwenden, stellt eine alternative Lösung der Aufgabe in Bezug zur Lösung mit mindestens zwei in Höhenrichtung voneinander beabstandeten Grundeinheiten dar. Über diese dann nur eine Grundeinheit können die Glieder in der Biegeebene schwenkbeweglich zueinander verbunden sein.

Zur weiteren Stabilisierung und insbesondere Erhöhung der Zugfestigkeit der Leitungsführungseinrichtung kann vorgesehen sein, dass endseitig des Verbindungssteges insbesondere als Steckelemente ausgebildete dritte Verbindungsmittel vorgesehen sind, über die die Seitenwandsegmente benachbarter Glieder jeweils insbesondere schwenkbar miteinander verbunden sind.

In der Zeichnung zeigen:
Fig. 1 eine perspektivische Ansicht einer Ausführungsform einer Leitungsführungseinrichtung mit Seitenwandsegmenten und diese verbindenden Grundeinheiten als Teil einer Verbindungsvorrichtung,
Fig. 2 und 3 jeweils eine Seitenansicht der Leitungsführungseinrichtung gemäß Figur 1,
Fig. 4 eine Explosionsdarstellung der Leitungsführungseinrichtung gemäß Figur 1
Fig.5 und 6 jeweils eine Einzeldarstellung eines in Figur 1 gezeigten Seitenwandsegments,
Fig.7 eine Draufsicht auf eine Ausführungsform der Grundeinheit,
Fig.8 eine perspektivische Darstellung der in Figur 1 dargestellten Ausführungsform der Verbindungsvorrichtung mit zwei Grundeinheiten,
Fig. 9a bis 9c jeweils eine Ansicht einer weiteren Ausführungsform der Verbindungsvorrichtung mit zwei Grundeinheiten,
Fig. 10a bis 10c jeweils eine Seitenansicht einer weiteren Ausführungsform der Verbindungsvorrichtung mit zwei Grundeinheiten,
Fig.11 und 11a eine Seitenansicht der Verbindungsvorrichtung gemäß den Figuren 10a bis 10b in Eingriffslage zwischen zwei Seitenwandsegmenten bzw. einen Ausschnitt gemäß Figur 11, jedoch mit einer anderen Ausführungsform der Verbindungsvorrichtung,
Fig. 12a bis 12c jeweils eine Ansicht einer weiteren Ausführungsform der Verbindungsvorrichtung mit drei Grundeinheiten,
Fig. 13a bis 13b jeweils eine Seitenansicht einer weiteren Ausführungsform der Verbindungsvorrichtung mit drei Grundeinheiten,
Fig. 14 eine Seitenansicht der Verbindungsvorrichtung gemäß den Figuren 13a bis 13b in Eingriffslage zwischen zwei Seitenwandsegmenten,
Fig. 15a bis 15b jeweils eine Seitenansicht einer weiteren Ausführungsform der Verbindungsvorrichtung mit einer Grundeinheit,
Fig. 16 eine Seitenansicht der Ausführungsform der Verbindungsvorrichtung gemäß Figur 15 in Einbaulage in die Leitungsführungseinrichtung und
Fig. 17a und 17b jeweils eine Seitenansicht auf die Leitungsführungseinrichtung gemäß Figur 15, jedoch in unverschwenkter bzw. verschwenkter Lage Seitenwandsegmente.

In der folgenden Beschreibung sind sämtliche Begrifflichkeiten zur Beschreibung der Örtlichkeit wie oben, unten, vorn, hinten, rechts und links so gemeint, wie sie in der jeweiligen Figur selbst gezeigt ist, es sei denn, es ist eigens anders definiert.

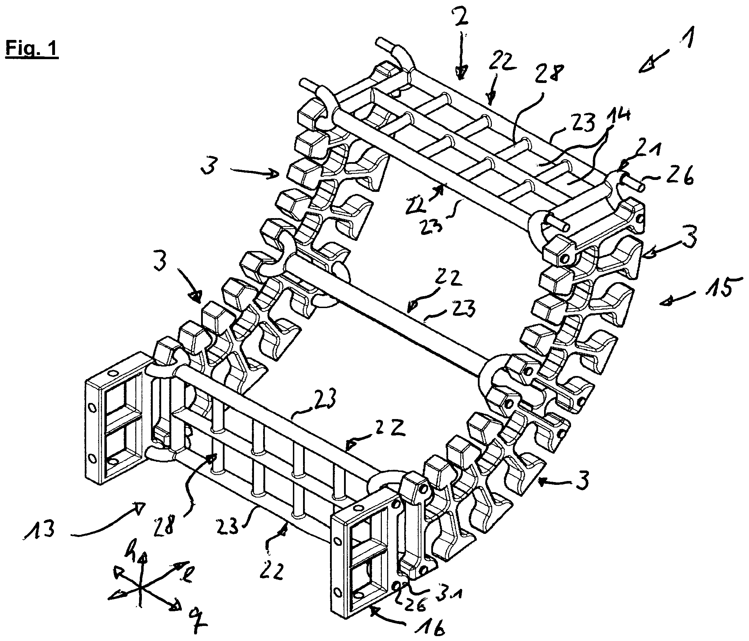

In den Figuren 1 bis 17 werden in verschiedenen Ansichten, Schnittansichten und Teilansichten unterschiedliche Ausführungsformen eine Leitungsführungseinrichtung 1 mit einer erfindungsgemäßen Verbindungsvorrichtung 2 aus in Längsrichtung l aneinandergereihten Gliedern gezeigt. Die Verbindungsvorrichtung 2 weist Verbindungselemente 21 zur Verbindung zweier benachbarter Glieder der Leitungsführungseinrichtung 1 zur Führung von hier nicht dargestellten Leitungen, Schläuchen, Kabeln und/oder dergleichen auf. Die Glieder umfassen jeweils zwei in Querrichtung q beabstandet angeordnete Seitenwandsegmente 3, die einen Aufnahmeraum 13 für die Leitung, Schläuche, Kabel und/oder dergleichen begrenzen. Die Seitenwandsegmente 3 eines Gliedes sind in Einbaulage jeweils über zumindest ein Verbindungselement 21 mit dem zugeordneten Seitenwandsegment 3 des benachbarten Gliedes verbunden.

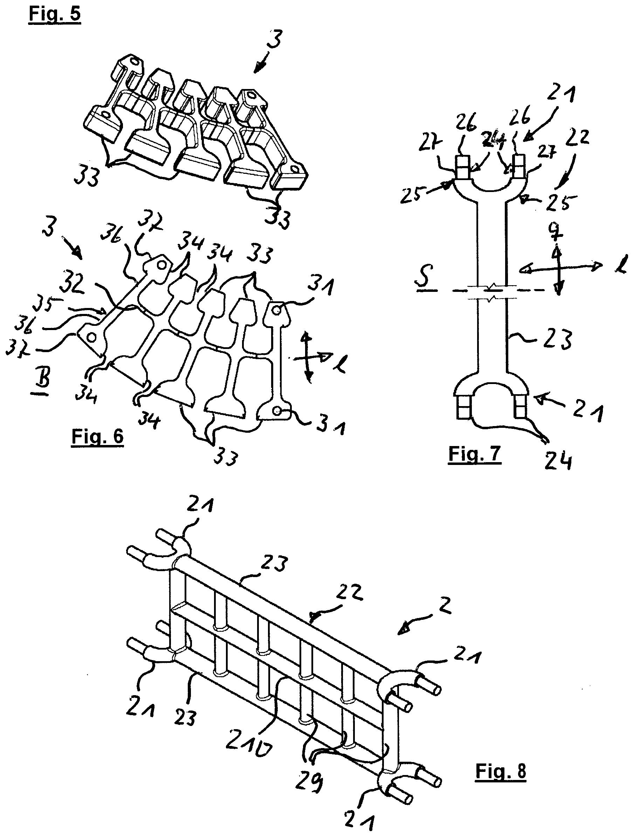

Die besondere Ausgestaltung der Verbindungsvorrichtung 2 bzw. der Leitungsführungseinrichtung 1 besteht darin, dass die zur Verbindung der Seitenwandsegmente 3 zweier benachbarter Glieder vorgesehenen Verbindungselemente 21 unter Ausbildung einer Grundeinheit 22 der Verbindungsvorrichtung 2 über eine Traverse 23 voneinander beabstandet fest verbunden sind. Die Grundeinheit 22 ist in Figur 7 in einer Einzeldarstellung gezeigt. In Einbaulage erstreckt sich die Traverse 23 in Querrichtung q der Leitungsführungseinrichtung 1. Grundsätzlich sind die Seitenwandsegmente 3 zweier benachbarter Glieder allein über zumindest eine Grundeinheit 22 miteinander verbunden.

Wie in den Figuren 1 bis 4 gezeigt, wird der Aufnahmeraum 13 durch die Grundeinheiten 22 in Querrichtung q vollständig überbrückt. Mittels der Grundeinheit 22 werden nicht nur die in Längsrichtung fluchtende Seitenwandsegmente 3 zweier benachbarter Glieder miteinander verbunden. Zusätzlich werden, in Erfüllung einer Querstegfunktion, auch die in Querrichtung fluchtende Seitenwandelemente 3 miteinander verbunden, so dass entsprechende Querstege eingespart sind. Dies ermöglicht eine bessere Zugänglichkeit zur Reinigung der Leitungsführungseinrichtung 1. Ferner wird die Anzahl der für den Aufbau der Leitungsführungseinrichtung 1 notwendigen Bauteile verringert. Ferner werden Herstellung und Montage der Leitungsführungseinrichtung 1 vereinfacht.

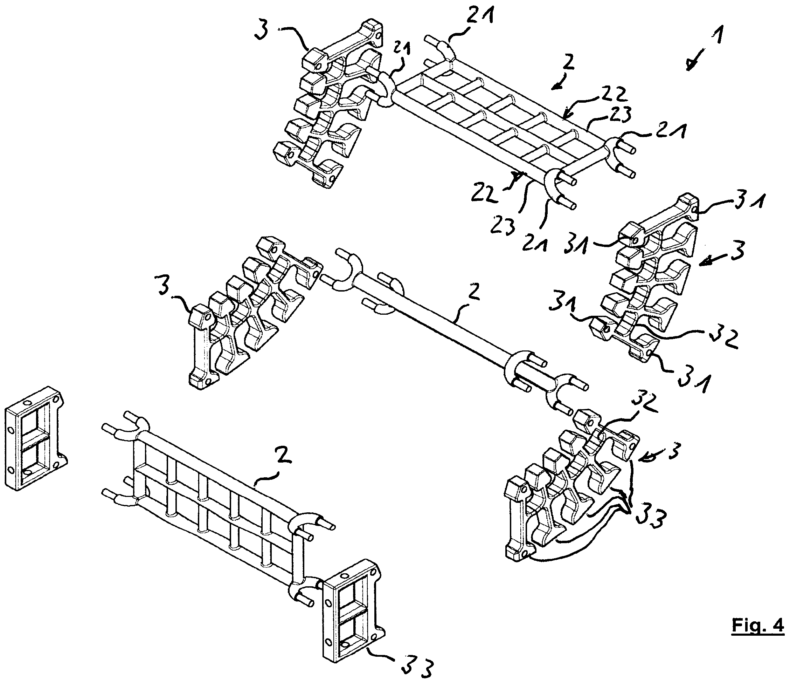

Im Übrigen weisen die Seitenwandsegmente 3 im unbelasteten Zustand hier eine gekrümmte Form auf, welches aber nicht erfindungsnotwendig ist. Dies ist insbesondere Figur 4 deutlich entnehmbar. Die gekrümmte Form von Seitenwandsegmenten 3 wird bereits in DE 10 2007 017 940 A1 beschrieben, worauf auch in diesem Zusammenhang Bezug genommen wird. Infolge der gekrümmten Form baut das Seitenwandsegment 3 bei Biegung hin zur Streckung sowie hin zur stärkeren Krümmung eine federelastische Vorspannung auf.

Die Grundeinheit 22 ist hier einstückig und zwar als einzelnes Spritzgussteil aus Kunststoff hergestellt. Indem hier nicht mehr, wie üblich, einzelne Verbindungselemente, sondern über die Grundeinheit 22 zusammengefasste Verbindungselemente 21 eingesetzt werden, wird die Anzahl der Bauteile weiter verringert. Jede Verringerung der Bauteile trägt zudem zur verbesserten Reinigung bei.

Wie in Figur 7 gezeigt, sind die Verbindungselemente 21 bezüglich einer zur Längserstreckung der Traverse 23 senkrechten und mittigen Spiegelsymmetrieebene S (in Figur 7 gezeigt) spiegelsymmetrisch zueinander angeordnet und ausgerichtet. Die Traverse 23 greift bezüglich einer Erstreckung der Verbindungselemente 21 senkrecht zur Längserstreckung der Traverse 23 jeweils mittig an den Verbindungselementen 21 an, so dass sich die Verbindungselemente 21 jeweils mit zwei freien Enden 24 von der Traverse 23 weg erstrecken. In den hier gezeigten Ausführungsbeispielen weisen die Verbindungselemente 21 jeweils eine U-förmige Grundform mit zwei zueinander parallelen Schenkeln 25 auf, die in Längserstreckung der Traverse 23 von derselben weg verlaufend angeordnet sind.

Die Schenkel 25 sind endseitig zur Ausbildung von ersten Verbindungsmitteln hier als leicht konisch zulaufende Steckvorsprünge 26 ausgebildet. Wie beispielsweise Figur 1 entnehmbar, greifen die Steckvorsprünge 26 jeweils in eine zugeordnete an dem betreffenden Seitenwandsegment 3 als zweite Verbindungsmittel vorgesehene Aufnahmeöffnung 31 ein, wobei der jeweilige Schenkel 25 über einen Anschlag 27 an dem Öffnungsrand der Aufnahmeöffnung 21 anliegt. Dadurch wird eine bezüglich der Längsrichtung l der Leitungsführungseinrichtung 1 formschlüssige und bezüglich der Querrichtung q der Leitungsführungseinrichtung 1, reibschlüssige Verbindung zwischen dem Verbindungselement 21 und dem zugeordneten Seitenwandsegment 3 hergestellt. Unmittelbar einsichtig ist, dass eine derartige Steckverbindung auch für ungeübte leicht herstellbar ist. Die Aufnahmeöffnung 21 ist als Durchgangsöffnung mit einer Öffnungsachse parallel zur Querrichtung q ausgebildet.

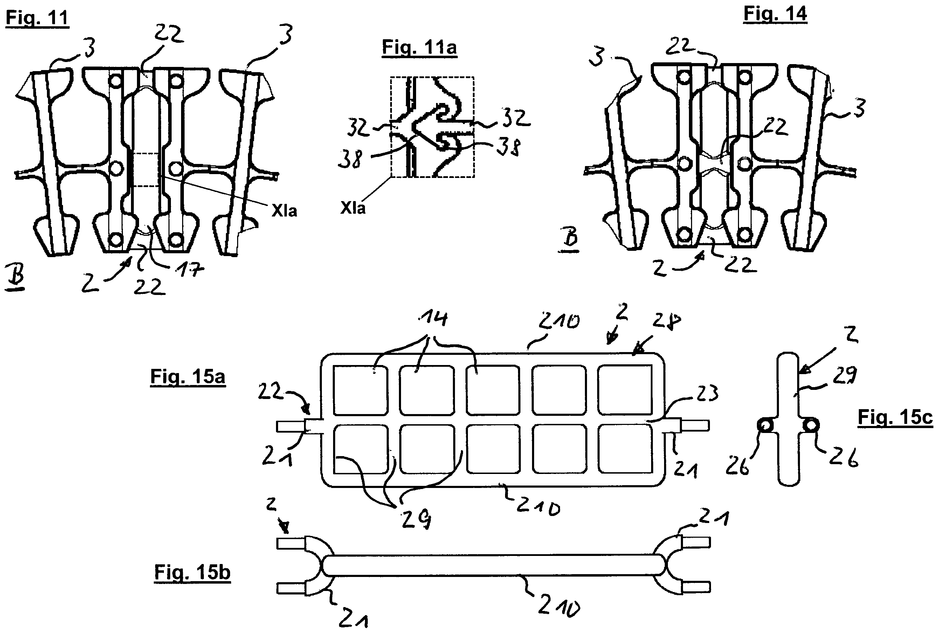

Bis auf die in Figur 15 dargestellte Ausführungsform der Leitungsführungseinrichtung 1 sind die Seitenwandsegmente 3 eines Gliedes zu den des benachbarten Gliedes jeweils über mindestens zwei Grundeinheiten 22 verbunden, die in Höhenrichtung h parallel voneinander beabstandet in der Leitungsführungseinrichtung 1 angeordnet sind. Die Grundeinheiten sind über ein ebenes Stabwerk 28 beabstandet miteinander verbunden. Sie sind einstückig miteinander verbunden. Dieses Stabwerk 28 liegt in einer von den beiden Grundeinheiten 22 definierten Ebene.

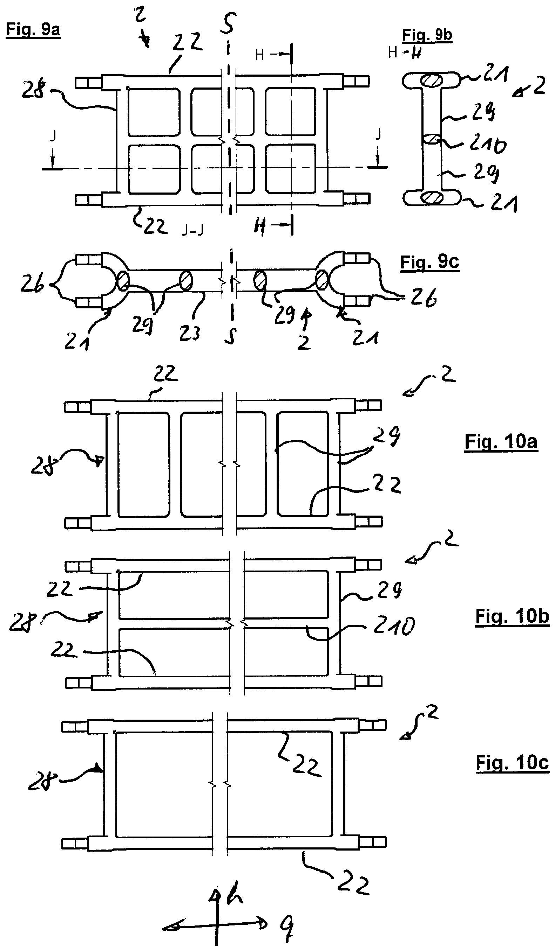

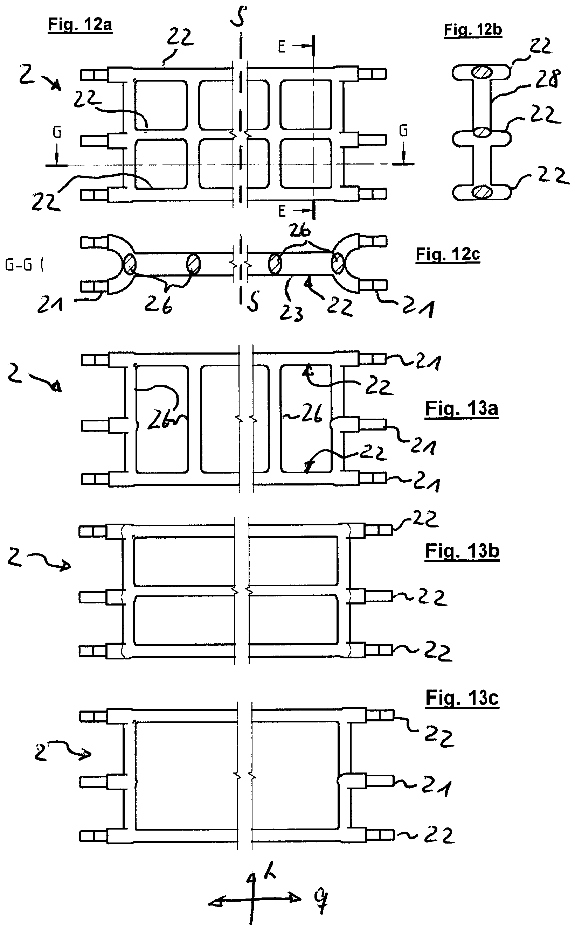

Es werden verschiedene Ausführungsbeispiele der Verbindungsvorrichtung 2 mit unterschiedlichem Stabwerk 28 bei zwei Grundeinheiten 22 in den Figuren 9a bis 9c und 10a bis 10c und bei drei Grundeinheiten 22 in den Figuren 12a bis 12c und 13a bis 13c gezeigt, wobei, wie ein Fachmann unschwer erkennen kann, hier weitere Variationen in der Art des Stabwerk und in der Anzahl der Grundeinheiten möglich sind. In allen Fällen bilden die Grundeinheiten 22 und das Stabwerk 28 ein einstückiges Bauteil aus Kunststoff-Spritzguss. Deutlich entnehmbar ist, dass die Grundeinheiten 22 und das Stabwerk 28 den Aufnahmeraum 13 begrenzen beziehungsweise denselben in einzelne Fächer 14 unterteilen.

In den hier gezeigten Ausführungsbeispielen weist das Stabwerk 28 mindestens zwei sich in Höhenrichtung erstreckende Stabwerkstege 29 (Figur 10c). Diese greifen jeweils am Ende der Traversen 23 an. Sie bilden mit den Traversen 23 einen äußeren Rahmen, der den Aufnahmeraum 13 begrenzt. Zur weiteren Stabilisierung ist in der Ausführungsform der Verbindungsvorrichtung 2 gemäß Figur 10b das Stabwerk 28 um eine Traverse 210 ohne endseitige Verbindungselemente erweitert. Gemäß Figur 10a sind mehrere über die Querrichtung q gleich beabstandet angeordnete Stabwerkstege 29 vorgesehen. Gemäß Figur 9a ist, in Kombination der Ausführungsformen der Verbindungsrichtung 2 gemäß Figur 10a und 10b, ein Stabwerk 28 mit Stabwerkstegen 29 und Traverse 210 gezeigt.

Ähnlich gestaltet sich der Aufbau der Verbindungsvorrichtung 2 gemäß den Figuren 12a-12c und 13a-13b, wobei hier anstatt der Traverse 30 eine zusätzliche Grundeinheit 22 vorgesehen ist, die ihrerseits mit ihren Verbindungselementen 21 in einem mittleren Bereich an den zugeordneten Seitenwandsegmenten 3 angreift. Somit sind drei Grundeinheiten 22, d.h. eine untere Grundeinheit 22, eine mittlere Grundeinheit 22 und eine obere Grundeinheit 22, vorgesehen, die über Stabwerkstege 29 miteinander verbunden sind.

Wie insbesondere an den Schnitten gemäß den Figuren 9b, 9c, 12b und 12c ablesbar, weisen Grundeinheit 22 und Stabwerk 28 jeweils einen runden Querschnitt auf, wobei Querschnitt der Traverse 23 der Grundeinheiten 22 und das Stabwerk 28 oval mit einem größerem Durchmesser in Längsrichtung l der Leitungsführungseinrichtung 1 ist. Hierdurch werden die Verwindungssteifigkeit des Bauteils und damit die Stabilität der Leitungsführungseinrichtung 1 verbessert.

Wie insbesondere den Figuren 1, 3, 11 und 14 entnehmbar, sind, sind die benachbarten Glieder der Leitungsführungseinrichtung 1 bezüglich der Längsrichtung l der Leitungsführungseinrichtung 1 unter Ausbildung eines Freiraumes 17 zwischen den in Längsrichtung l benachbarten Seitenwandsegmenten 3 zumindest in einem konstanten Abstand a zueinander gehalten. Dadurch ist es möglich, auch die Stirnseiten der Glieder wirkungsvoll zu reinigen. Ferner wird die Stabilität der Leitungsführungseinrichtung 1 verbessert.

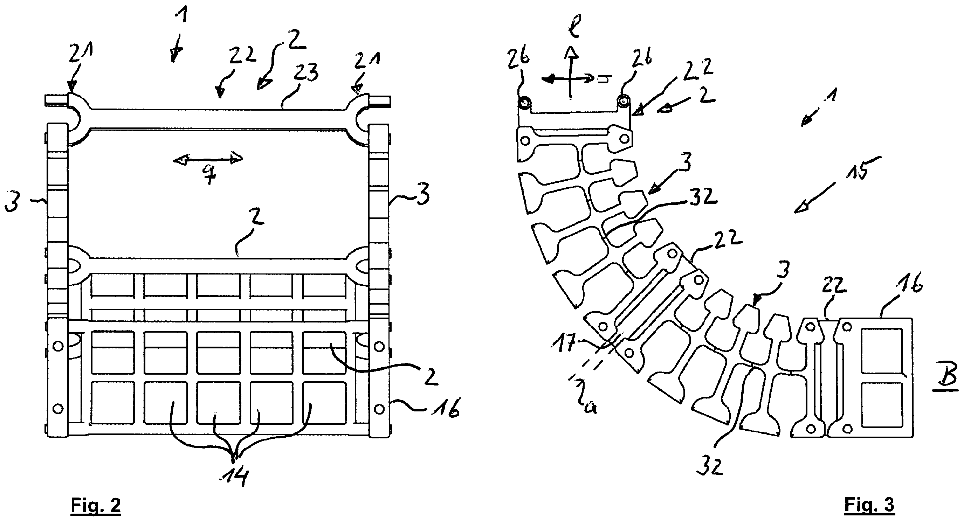

Dies bedeutet zugleich das an dieser Stelle keine Biegung der Leitungsführungseinrichtung 1 bzw. keine Verschwenkung der benachbarten Glieder erfolgen kann, wenn eventuelle werkstoffbedingte geringe elastische Verformungen innerhalb der Leitungsführungseinrichtung 1 vernachlässigt werden. Zur Ausbildung einer Biegung der Leitungsführungseinrichtung 1, beispielsweise beim Verfahren der Leitungsführungseinrichtung 1 unter Ausbildung eines hier in Figuren 1 bis 3 angedeuteten Umlenkbogens 15, ist hier vorgesehen, dass die Seitenwandsegmente 3 bezüglich einer Biegeebene B senkrecht zur Querrichtung q elastisch verbiegbar sind. Hierbei ist die Biegeebene B in den Figuren 3, 6, 11, 14, 17a und 17b gleich der Bildebene.

Diese konstante Beabstandung wird konstruktiv hier dadurch erreicht, dass, wenn zumindest zwei gleiche Grundeinheiten 22 zur Verbindung benachbarter Glieder eingesetzt werden, die halbe Distanz der Steckvorsprünge 26 in Längsrichtung l größer als die Distanz der Aufnahmeöffnung 31 zu dem stirnseitigen Ende des jeweiligen Seitenwandsegments 3 ist.

Die Traverse 23 der jeweiligen Grundeinheit 22 ist zwischen den beiden Gliedern angeordnet. Dies ergibt sich aus der bereits beschriebenen Geometrie, insbesondere des mittigen Angreifens der Traverse 23 an die Verbindungselemente 21. Da die Grundeinheit 22 zwischen den zu verbindenden Gliedern angeordnet an denselben angreift, ist der Aufnahmeraum 13 dieser Glieder nach oben und unten hin offen und kann daher leicht gereinigt werden.

Bei der hier gezeigten Ausführungsform der Leitungsführungseinrichtung 1 gemäß den Figuren 1-4 ist an einem Ende ein Anschlusselement 16 zum Anschluss und zur Übergabe der in dem Aufnahmeraum 13 geführten hier nicht dargestellten Leitungen, Schläuche und/oder Kabeln an einem hier nicht dargestellten üblichen Anschlusspunkt zum Verfahren der Leitungsführungseinrichtung 1 vorgesehen. Hierbei ist das Anschlusselement 16 mittels der Verbindungsvorrichtung 2 in gleicher Weise mit dem benachbarten Glied wie die zueinander benachbarten Glieder verbunden. Auch hier sind Anschlusselement 16 und sein benachbartes Glied in einem konstanten Abstand a zueinander gehalten. Dies hat den Vorteil, dass die Übergabe zur Aufnahme der Leitungen und dergleichen ohne schädliche mechanische Belastung derselben erfolgen kann.

Gleich wie in DE 10 2007 017 940 A1 detailliert beschrieben und hier insbesondere Figuren 5 und 6 deutlich entnehmbar, weisen die Seitenwandsegmente 3 jeweils einen in der Biegeebene B flexiblen Verbindungssteg 32 auf, wobei die Biegeachse parallel zur Querrichtung q angeordnet ist. Die Biegung des Verbindungsstegs 32 wird durch unterseitig und oberseitig auf ihm einstückig angeordnete Seitenteile 33 mit in Längsrichtung l weisenden und zur Begrenzung der Biegung gegeneinander führbaren Anschlägen 34 begrenzt. Der Verbindungssteg 32 verläuft in Längsrichtung l der Leitungsführungseinrichtung 1.

Die Seitenteile 33 sind durch den Verbindungssteg 32 einstückig miteinander verbunden angeordnet. Sie weisen einen im Wesentlichen senkrecht zu diesem Verbindungssteg 32 in der Biegeebene verlaufenden, in Längsschnitt T-förmigen Steg 35 mit einem Fußsteg 36 und einem Quersteg 37 auf, wobei der Fußsteg 36 mit dem Verbindungssteg 32 verbunden und der Quersteg 37 an einem dem Verbindungssteg 32 gegenüberliegenden Ende des Fußsteges 36 angeordnet ist. Die in Längsrichtung l der Leitungsführungseinrichtung 1 weisenden Stirnseiten der Querstege 37 bilden die Anschläge 34 zur Begrenzung des Biegewinkels.

Der Verbindungssteg (5) ist bezüglich der Höhenrichtung h in einem Mittenbereich angeordnet.

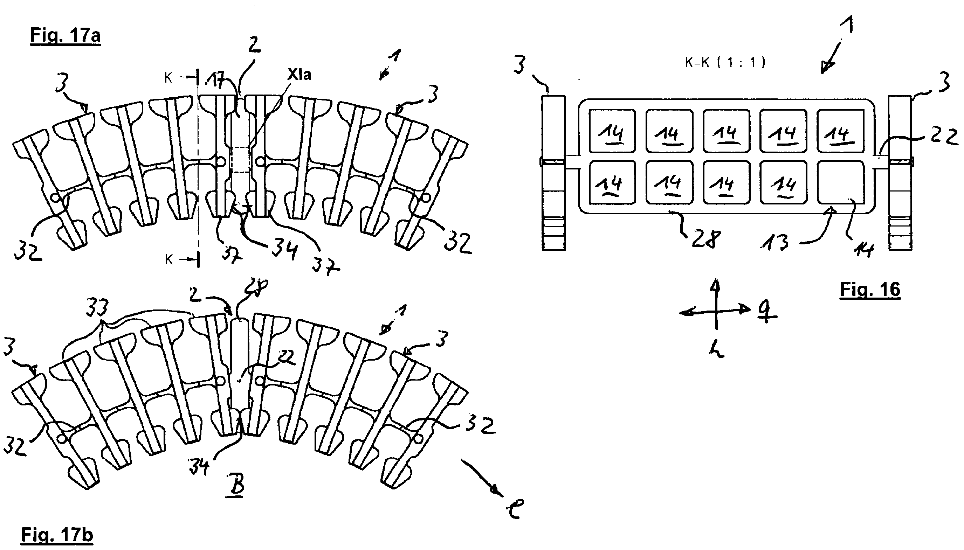

Wie in Figur 11a angedeutet, sind können in den Ausführungsform der Leitungsführungseinrichtung 1 gemäß Figuren 9-11 sowie auch gemäß den Figuren 16-17 endseitig des Verbindungssteges 32 zusätzlich hier als pfeilartige Steckelemente 38 ausgebildete dritte Verbindungsmittel vorgesehen sein, über die die Seitenwandsegmente 3 benachbarter Glieder zusätzlich zu den oben beschriebenen Formen der Verbindungsvorrichtung 2 schwenkbar miteinander verbunden sind.

In dem Fall, dass lediglich eine Grundeinheit 22 zur Verbindung der Seitenwandsegmente 3 benachbarter Glieder vorgesehen ist, kann die Verbindung als Schwenkverbindung mit einer Schwenkbewegung in Biegeebene B ausgebildet werden Dieses ist exemplarisch in der Ausführungsform der Leitungsführungseinrichtung 1 gemäß Figur 16, 17b und 17b hier mit der Verbindungsvorrichtung 2 gemäß Figur 15a-15c gezeigt. Hierbei ist diese Grundeinheit 22 in Höhe des Verbindungssteges 32 angeordnet und schließt somit hinsichtlich einer Kraftübertragung in Längsrichtung l nahezu momentfrei an denselben an. Die Steckvorsprünge 26 der Verbindungselemente 21 greifen hierbei jeweils nicht reibschlüssig, sondern verdrehbar in die zugeordnete Aufnahmeöffnung 31 ein und sind axial gegen ein Herausgleiten aus der Aufnahmeöffnung gesichert. Diese axiale Sicherung ist nicht eigen gezeigt, da sie im Prinzip jede geeignete Form aufweisen kann.

Deutlich entnehmbar ist die Verschwenkung der Glieder an der Grundeinheit 22 den Figuren 16 und 17a mit der Darstellung einer unverschwenkten Position, in der Seitenwandsegmente 3 unter Ausbildung des Freiraumes 17 in dem Abstand a zueinander angeordnet sind, und 17b mit der Darstellung einer verschwenkten Position, in der die Seitenwandsegmente 3 an den unteren einander zugewandten Anschlägen 34 anschlagen. Infolge der axialen Beabstandung der Steckvorsprünge 26 voneinander bleiben die konstante Beabstandung der Seitenwandsegmente 3 in Höhe der freien Enden 24 bzw. der Steckvorsprünge 26 und, bis den Bereich der sich berührenden Anschläge 34, der Freiraum 17 zwischen den Seitenwandsegmenten 3 erhalten.

Zur Stabilisierung insbesondere hinsichtlich einer Verwindung und/oder Knickung der Grundeinheit 22, ist ein ebenes rahmenartiges Stabwerk hier beidseitig der Traverse 23 28 mit waagerechten Traversen 201 und senkrechten Stabwerkstegen 29 vorgesehen. Die Grundeinheit 22 ist somit in das Stabwerk 28 integriert.

In Figur 16a ist ferner zwischen den Gliedern ein gestrichelt gezeichnetes Rechteck XI eingezeichnet, das auf Figur 11a verweist. Hierbei dient diese Schwenkverbindung über die Steckelemente 38 in Verlängerung des Verbindungssteges 32 zur weiteren Sicherung der Verbindung über die Grundeinheit 22.

### Bezugszeichenliste

- 1: Leitungsführungseinrichtung
- 13: Aufnahmeraum
- 14: Fach
- 15: Umlenkbogen
- 16: Anschlussglied
- 17: Freiraum
- 2: Verbindungsvorrichtung
- 21: Verbindungselement
- 22: Grundeinheit
- 23: Traverse
- 24: freies Ende
- 25: Schenkel
- 26: Steckvorsprung
- 27: Anschlag (Steckvorsprung)
- 28: Stabwerk
- 29: Stabwerksteg
- 210: Traverse
- 3: Seitenwandsegment
- 31: Aufnahmeöffnung
- 32: Verbindungssteg
- 33: Seitenteil
- 34: Anschlag
- 35: Steg
- 36: Fußsteg
- 37: Quersteg
- 38: Steckelement
- B: Biegeebene
- S: Spiegelsymmetrieebene
- a: Abstand
- h: Höhenrichtung
- l: Längsrichtung
- q: Querrichtung

## Patentansprüche

1. Verbindungsvorrichtung mit Verbindungselementen (21) zur Verbindung zweier benachbarter Glieder einer Leitungsführungseinrichtung (1) zur Führung von Schläuchen oder Kabeln aus in Längsrichtung (l) aneinandergereihten Gliedern, wobei die Glieder jeweils zwei in Querrichtung (q) beabstandet angeordnete, einen Aufnahmeraum (13) als Teil eines Leitungsführungskanals für die Schläuche oder Kabel begrenzende Seitenwandsegmente (3) aufweisen und die Seitenwandsegmente (3) in Einbaulage jeweils über ein Verbindungselement (21) mit dem zugeordneten Seitenwandsegment (3) des jeweils benachbarten Gliedes verbunden sind, wobei die zur Verbindung der Seitenwandsegmente (3) zweier benachbarter Glieder vorgesehenen Verbindungselemente (21) unter Ausbildung einer Grundeinheit (22) der Verbindungsvorrichtung (2) über eine Traverse (23) voneinander beabstandet miteinander verbunden sind, **dadurch gekennzeichnet, dass** mindestens zwei Grundeinheiten (22) vorgesehen sind, die in einer Höhenrichtung (h) senkrecht zur Querrichtung (q) und Längsrichtung (l) der Leitungsführungseinrichtung voneinander beabstandet angeordnet sind.

2. Verbindungsvorrichtung nach Anspruch 1, **dadurch gekennzeichnet, dass** die beiden Grundeinheiten (22) über eine Konstruktion, insbesondere über ein Stabwerk (28) mit mindestens einem Stabwerksteg (29) fest miteinander verbunden sind.

3. Verbindungsvorrichtung nach Anspruch 2, **dadurch gekennzeichnet, dass** mindestens das Stabwerk (28) zwei Stabwerkstege (29) aufweist, die jeweils die Traversen (23) vorzugsweise an deren Enden miteinander verbindend angeordnet sind.

4. Verbindungsvorrichtung nach Anspruch 2 oder 3, **dadurch gekennzeichnet, dass** die Grundeinheiten (22) und das Stabwerk (28) ein einstückiges Bauteil bilden.

5. Verbindungsvorrichtung nach einem der vorhergehenden Ansprüche, **dadurch gekennzeichnet, dass** die Verbindungselemente (21) jeder Grundeinheit (22) jeweils eine gestreckte Grundform oder gebogene, insbesondere U-förmige Grundform mit zwei vorzugsweise gleichen Schenkeln (25) aufweisen.

6. Verbindungsvorrichtung nach Anspruch 5, **dadurch gekennzeichnet, dass** die Schenkel (25) in Längserstreckung der Traverse (23) und von derselben weg weisend angeordnet sind.

7. Verbindungsvorrichtung nach einem der vorhergehenden Ansprüche, **dadurch gekennzeichnet, dass** die Traverse (23) einen ovalen Querschnitt mit einem größerem Durchmesser parallel zu einer von der Traverse (23) und den Verbindungselementen (21) definierten Ebene aufweist.

8. Leitungsführungseinrichtung zur Führung von Schläuchen oder Kabeln in einem Leitungsführungskanal, aufweisend in Längsrichtung (l) aneinandergereihte und miteinander verbundene Gliedern, wobei die Glieder jeweils zwei in Querrichtung beabstandet angeordnete einen Aufnahmeraum (13) als Teil eines Leitungsführungskanals begrenzende Seitenwandsegmente (3) aufweisen und die Seitenwandsegmente (3) jeweils mit dem zugeordneten Seitenwandsegment (3) des benachbarten Seitenwandsegment (3) mittels einer Verbindungsvorrichtung (2) gemäß einem der Ansprüche 1 bis 7 mit mindestens zwei Grundeinheiten (22) miteinander verbunden sind oder mit mindestens einer Grundeinheit (22) miteinander verbunden sind, wobei die Seitenwandsegmente (3) in einer Biegeebene (B) senkrecht zur Querrichtung (q) der Leitungsführungseinrichtung (1) flexibel biegbar ausgebildet sind, die Seitenwandsegmente (3) jeweils einen in der Biegeebene (B) flexiblen Verbindungssteg (32) aufweisen, dessen Biegung durch unterseitig und/oder oberseitig auf ihm vorzugsweise einstückig angeordnete Seitenteile (33) mit in Längsrichtung (l) weisenden und zur Begrenzung der Biegung gegeneinander führbaren Anschlägen (34) begrenzt wird, und die mindestens eine Grundeinheit (22) in Höhe des Verbindungsstegs (32) angeordnet ist, wobei sich die Traverse (210) der zumindest einen Grundeinheit (22) in Querrichtung (q) erstreckt und zwischen den beiden durch die Grundeinheit (22) verbundenen Gliedern (12) angeordnet ist.

9. Leitungsführungseinrichtung nach Anspruch 8, **dadurch gekennzeichnet, dass**, bezüglich einer Höhenrichtung (h) senkrecht zur Längsrichtung (l) und zur Querrichtung (q), eine Grundeinheit (22) in einem Mittenbereich, eine Grundeinheit (22) in einem unteren Bereich und/oder eine Grundeinheit (22) in einem oberen Bereich jeweils zwischen den Gliedern angeordnet sind.

10. Leitungsführungseinrichtung nach Anspruch 8 oder 9, **dadurch gekennzeichnet, dass** die Verbindungselemente (22) jeweils die benachbarten Seitenwandsegmente(3) endseitig form- und/oder reibschlüssig miteinander verbinden.

11. Leitungsführungseinrichtung nach Anspruch 10, **dadurch gekennzeichnet, dass** die Verbindungselemente (21) der Grundeinheit (22) jeweils zwei freie Enden (24) mit ersten Verbindungsmitteln zum Anschluss an zweite Verbindungsmittel des jeweils zugeordneten Seitenwandsegments (3) aufweisen.

12. Leitungsführungseinrichtung nach Anspruch 11, **dadurch gekennzeichnet, dass** die ersten Verbindungsmittel als endseitige Verdickungen (Hantelform) oder als sich in Querrichtung erstreckende Steckvorsprünge (26) ausgebildet sind, die jeweils zur Herstellung der Verbindung in Querrichtung (q) in eine ihnen zugeordnete als zweites Verbindungsmittel an dem Seitenwandsegment (3) vorgesehene in Querrichtung (q) geöffnete Aufnahmeöffnung (31) eingreifen.

13. Leitungsführungseinrichtung nach einem der Ansprüche 8 bis 12, **dadurch gekennzeichnet, dass** die benachbarten Glieder der Leitungsführungs-einrichtung (1) bezüglich der Längsrichtung (l) in einem konstanten Abstand (a) zueinander gehalten angeordnet sind.

14. Leitungsführungseinrichtung nach Anspruch 13, **dadurch gekennzeichnet, dass** die Beabstandung der benachbarten Glieder über die Verbindungselemente (21) und/oder über Abstandselemente, beispielsweise über in Längsrichtung (l) wirksame Anschläge der Glieder erfolgt.

15. Leitungsführungseinrichtung nach Anspruch 8, **dadurch gekennzeichnet, dass** endseitig des Verbindungssteges (32) insbesondere als Steckelemente (38) ausgebildete dritte Verbindungsmittel vorgesehen sein, über die die Seitenwandsegmente (3) benachbarter Glieder jeweils insbesondere schwenkbar miteinander verbunden sind.

## Claims

1. A connecting arrangement comprising connecting elements (21) for connecting two adjacent members of a line guiding device (1) for guiding hoses or cables, comprising members which are connected together in a row in the longitudinal direction (I), wherein the members respectively have two side wall segments (3) which are arranged spaced in the transverse direction (q) and which delimit a receiving space (13) as part of a line guiding passage for the hoses or cables and the side wall segments (3) in the installation position are respectively connected by way of a connecting element (21) to the associated side wall segment (3) of the respectively adjacent member, wherein the connecting elements (21) provided for connecting the side wall segments (3) of two adjacent members are connected together at a mutual spacing by way of a transverse member (23) with the formation of a base unit (22) of the connecting arrangement (2) **characterised in that** there are provided at least two base units (22) which are arranged spaced from each other in a heightwise direction (h) perpendicularly to the transverse direction (q) and the longitudinal direction (I) of the line guiding device .

2. A connecting arrangement as set forth in claim 1 **characterised in that** the two base units (22) are fixedly connected together by way of a construction, in particular by way of a bar framework (28) having at least one bar framework limb (29).

3. A connecting arrangement as set forth in claim 2 **characterised in that** at least the bar framework (28) has two bar framework limbs (29) which are respectively arranged connecting the transverse members (23) together, preferably at the ends thereof.

4. A connecting arrangement as set forth in claim 2 or claim 3 **characterised in that** the base units (22) and the bar framework (28) form a one-piece component.

5. A connecting arrangement as set forth in one of the preceding claims **characterised in that** the connecting elements (21) of each base unit (22) are respectively of an elongated basic shape or a curved, in particular U-shaped basic shape, with two preferably equal limbs (25).

6. A connecting arrangement as set forth in claim 5 **characterised in that** the limbs (25) are arranged in the longitudinal extent of the transverse member (23) and facing away from same.

7. A connecting arrangement as set forth in one of the preceding claims **characterised in that** the transverse member (23) is of an oval cross-section with a larger diameter parallel to a plane defined by the transverse member (23) and the connecting elements (21).

8. A line guiding device for guiding hoses or cables in a line guiding passage, having members which are connected together and arranged in a row in the longitudinal direction (1), wherein the members respectively have two side wall segments (3) arranged spaced in the transverse direction and delimiting a receiving space (13) as part of a line guiding passage and the side wall segments (3) are respectively connected together with the associated side wall segment (3) of the adjacent side wall segment (3) by means of a connecting arrangement (2) as set forth in one of claims 1 through 7 with at least two base units (22) or are respectively connected together with at least one base unit (22) wherein the side wall segments (3) are of a flexibly bendable configuration in a bending plane (B) perpendicularly to the transverse direction (q) of the line guiding device (1), the side wall elements (3) respectively have a connecting limb (32) which is flexible in the bending plane (B) and the bending of which is limited by side portions (33) which are arranged thereon preferably in one piece at the underside and/or the top side, with abutments (34) which face in the longitudinal direction (I) and which can be guided against each other to limit the bending movement and the at least one base unit (22) is arranged at the height of the connecting limb (32) wherein the transverse member (210) of the at least one base unit (22) extends in the transverse direction (q) and is arranged between the two members (12) connected by the base unit (22).

9. A line guiding device as set forth in claim 8 **characterised in that**, with respect to a heightwise direction (h) perpendicularly to the longitudinal direction (I) and the transverse direction (q), a base unit (22) is arranged in a central region, a base unit (22) is arranged in a lower region and/or a base unit (22) is arranged in an upper region in each case between the members.

10. A line guiding device as set forth in claim 8 or claim 9 **characterised in that** the connecting elements (22) respectively connect the adjacent side wall segments (3) together at the end in positively locking and/or frictionally locking relationship.

11. A line guiding device as set forth in claim 10 **characterised in that** the connecting elements (21) of the base unit (22) respectively have two free ends (24) with first connecting means for connection to second connecting means of the respectively associated side wall segments (3).

12. A line guiding device as set forth in claim 11 **characterised in that** the first connecting means are in the form of end thickened portions (barbell shape) or in the form of plug-in projections (26) extending in the transverse direction, which for making the connection respectively engage in the transverse direction (q) into a receiving opening (31) which is associated with them and which is provided as second connecting means on the side wall segment (3) and which is open in the transverse direction (q).

13. A line guiding device as set forth in one of claims 8 through 12 **characterised in that** the adjacent members of the line guiding device (1) are arranged held at a constant spacing (a) relative to each other with respect to the longitudinal direction (I).

14. A line guiding device as set forth in claim 13 **characterised in that** the spacing of the adjacent members is produced by way of the connecting elements (21) and/or by way of spacer elements, for example by way of abutments of the members, the abutments being operative in the longitudinal direction (I).

15. A line guiding device as set forth in claim 8 **characterised in that** provided at the end of the connecting limb (32) are third connecting means which in particular are in the form of plug-in elements (38) and by way of which the side wall segments (3) of adjacent members are respectively in particular pivotably connected together.

## Revendications

1. Dispositif de connexion avec des éléments de connexion (21) pour relier deux maillons voisins d'un dispositif de guidage de câbles (1) pour guider des tuyaux ou des câbles constitués d'éléments adjacents dans la direction longitudinale (l), les maillons présentant chacun deux segments de paroi latérale (3) disposés à distance dans la direction transversale (q), délimitant un espace de réception (13) faisant partie d'un canal de guidage de conduites pour les tuyaux ou les câbles, et les segments de paroi latérale (3) étant reliés, en position de montage, au segment de paroi latérale (3) associé de l'élément respectivement voisin respectivement par un élément de connexion (21), où les éléments de connexion (21) prévus pour relier les segments de paroi latérale (3) de deux éléments voisins sont reliés entre eux à distance l'un de l'autre par une traverse (23) en formant une unité de base (22) du dispositif de connexion (2), **caractérisé en ce qu'**il sont prévus au moins deux unités de base (22) qui sont disposées à distance l'une de l'autre dans une direction de hauteur (h) perpendiculaire à la direction transversale (q) et à la direction longitudinale (l) du dispositif de guidage de câble.

2. Dispositif de connexion selon la revendication 1, **caractérisé en ce que** les deux unités de base (22) sont reliées de manière fixe l'une à l'autre par l'intermédiaire d'une construction, en particulier par l'intermédiaire d'un système de barres (28), avec au moins une traverse de système de barres (29).

3. Dispositif de connexion selon la revendication 2, **caractérisé en ce qu'**au moins le système de barres (28) présente deux traverses de système de barres (29) qui sont respectivement disposées de manière à relier entre elles les traverses (23), de préférence à leurs extrémités.

4. Dispositif de connexion selon la revendication 2 ou 3, **caractérisé en ce que** les unités de base (22) et le système de barres (28) forment un composant monobloc.

5. Dispositif de connexion selon l'une des revendications précédentes, **caractérisé en ce que** les segments de connexion (21) de chaque unité de base (22) présentent chacun une forme de base étirée ou une forme de base courbée, notamment en forme de U, avec deux branches (25) de préférence identiques.

6. Dispositif de connexion selon la revendication 5, **caractérisé en ce que** les branches (25) sont disposées dans l'extension longitudinale de la traverse (23) et en s'éloignant de celle-ci.

7. Dispositif de connexion selon l'une des revendications précédentes, **caractérisé en ce que** la traverse (23) présente une section ovale de plus grand diamètre parallèle à un plan défini par la traverse (23) et les éléments de connexion (21).

8. Dispositif de guidage de câbles pour guider des tuyaux ou des câbles dans un canal de guidage de câbles, présentant des maillons alignés les uns à côté des autres dans la direction longitudinale (l) et reliés entre eux, les maillons présentant chacun deux éléments de paroi latérale (3) disposés à distance dans la direction transversale et délimitant un espace de réception (13) faisant partie d'un canal de guidage de câbles, les segments de paroi latérale (3) respectivement étant reliés au segment de paroi latérale (3) associé du segment respectivement voisin par un dispositif de connexion (2) selon l'une des revendications 1 à 7 avec au moins deux unités de base (22) ou sont reliés entre eux avec au moins une unité de base (22), les segments de paroi latérale (3) étant conçus de manière à pouvoir être pliés de manière flexible dans un plan de flexion (B) perpendiculaire à la direction transversale (q) du dispositif de guidage de câble (1), les segments de paroi latérale (3) présentant chacun une traverse de connexion (32) flexible dans le plan de flexion (B), dont la flexion est limitée par des parties latérales (33) disposées sur sa face inférieure et/ou supérieure, de préférence d'un seul tenant, avec des butées (34) orientées dans la direction longitudinale (1) et pouvant être guidées l'une contre l'autre pour limiter la flexion, et ladite au moins une unité de base (22) est disposée au niveau de la traverse de connexion (32), la traverse (210) de ladite au moins une unité de base (22) s'étendant dans la direction transversale (q) et étant disposée entre les deux maillons (12) reliés par l'unité de base (22).

9. Dispositif de guidage de câbles selon la revendication 8, **caractérisé en ce que**, par rapport à une direction de hauteur (h) perpendiculaire à la direction longitudinale (l) et à la direction transversale (q), une unité de base (22) est disposée dans une zone centrale, une unité de base (22) est disposée dans une zone inférieure et/ou une unité de base (22) est disposée dans une zone supérieure, respectivement entre les maillons.

10. Dispositif de guidage de câbles selon la revendication 8 ou 9, **caractérisé en ce que** les éléments de connexion (22) relient respectivement des segments de paroi latérale (3) voisins entre eux du côté de l'extrémité, par complémentarité de forme et/ou par friction.

11. Dispositif de guidage de câbles selon la revendication 10, **caractérisé en ce que** les éléments de connexion (21) de l'unité de base (22) présentent chacun deux extrémités libres (24) avec des premiers moyens de connexion pour le raccordement à des deuxièmes moyens de connexion du segment de paroi latérale (3) respectivement associé.

12. Dispositif de guidage de câbles selon la revendication 11, **caractérisé en ce que** les premiers moyens de connexion sont réalisés sous forme de renflements d'extrémité (forme d'haltère) ou de saillies d'enfichage (26) s'étendant dans la direction transversale, qui s'engagent chacune, pour établir la connexion dans la direction transversale (q), dans une ouverture de réception (31) qui leur est associée, qui est prévue comme deuxième moyen de connexion sur le segment de paroi latérale (3) et qui est ouverte dans la direction transversale (q).

13. Dispositif de guidage de câbles selon l'une des revendications 8 à 12, **caractérisé en ce que** les maillons adjacents du dispositif de guidage de câbles (1) sont maintenus à une distance constante (a) les uns des autres par rapport à la direction longitudinale (l).

14. Dispositif de guidage de câbles selon la revendication 13, **caractérisé en ce que** l'écartement des maillons voisins est réalisé par les éléments de connexion (21) et/ou par des éléments d'écartement, par exemple par des butées des maillons agissant dans la direction longitudinale (l).

15. Dispositif de guidage de câbles selon la revendication 8, **caractérisé en ce que** sont prévus, du côté de l'extrémité de la traverse de connexion (32), des troisièmes moyens de connexion réalisés en particulier sous forme d'éléments enfichables (38), par l'intermédiaire desquels les segments de paroi latérale (3) de maillons voisins sont reliés entre eux respectivement, en particulier de manière pivotante.
